# FASCICULE DE BREVET EUROPEEN

(11) **EP 2 969 623 B1**
(45) Date de publication et mention de la délivrance du brevet: **01.11.2017**
(21) Numéro de dépôt: 14713558.6
(22) Date de dépôt: 12.03.2014
(51) Int. Cl.: B60K 11/04

(54) **VALISE DE REFROIDISSEMENT COMPORTANT DES MOYENS DE RATTRAPAGE DES DISPERSIONS DE FABRICATION**
KÜHLEINHEIT MIT AUSGLEICHSMITTELN FÜR FERTIGUNGSTOLERANZEN
COOLING UNIT COMPRISING MEANS FOR COMPENSATING FABRICATION TOLERANCES

(30) Priorité: 14.03.2013 FR 1352272
(43) Date de publication de la demande: 20.01.2016
(73) Titulaire: Renault S.A.S., 92100 Boulogne-Billancourt (FR)
(72) Inventeur: SOLTOIAN, Serghei, F-91350 Grigny (FR); DUCHET-ANNEZ, Christophe, F-78000 Versailles (FR)
(86) Numéro de dépôt international: PCT/FR2014/050560
(87) Numéro de publication internationale: WO 2014/140478

(56) Documents cités:
- EP-A1- 1 067 005
- DE-A1-102009 021 883
- FR-A1- 2 924 386

## Description

L'invention concerne un ensemble de refroidissement transversal pour un véhicule automobile, plus communément connu sous la dénomination de "valise de refroidissement".

L'invention concerne plus particulièrement un ensemble de refroidissement transversal dit "valise de refroidissement" apte à être fixé à un élément transversal avant d'une structure de caisse de véhicule automobile dit "face avant technique", comportant un élément apte à canaliser l'air de refroidissement ou convergent, un radiateur de refroidissement, et un moto-ventilateur électrique de refroidissement, qui sont portés respectivement par des premier, deuxième et troisième supports associés en forme de cadres de dimensions similaires, les premier et troisième supports étant fixés de part et d'autre du deuxième support par l'intermédiaire de moyens de fixation inférieurs par basculement et de moyens de fixation supérieurs par encliquetage, pour permettre successivement l'introduction verticale en position inclinée de chaque premier et/ou troisième support sur le deuxième support, puis le redressement à la verticale dudit premier et/ou troisième support parallèlement au deuxième support puis l'encliquetage suivant la direction longitudinale dudit premier et/ou troisième support sur le deuxième support.

Un tel ensemble de valise de refroidissement est déjà largement connu de l'état de la technique. Le moto-ventilateur et le convergent sont montés ensemble en de nombreux points sur le radiateur selon un montage dit hyperstatique qui peut être rendu problématique du fait des dispersions dimensionnelles résultant de la fabrication des pièces, et en particulier des dispersions concernant les moyens de fixation inférieurs et supérieurs.

Par ailleurs, ces pièces subissent de nombreuses sollicitations causées par les efforts auxquels la valise de refroidissement est sujette lors de son utilisation. Ces sollicitations peuvent à terme entraîner la rupture des points de fixation du convergent, du radiateur de refroidissement, et du moto-ventilateur, ou transmettre des efforts provoquant la dégradation d'un ou plusieurs de ces mêmes éléments.

L'invention propose un ensemble de valise de refroidissement du type décrit précédemment dont les points de fixation autorisent sélectivement certains degrés de liberté entre le radiateur et le convergent d'une part, et entre le radiateur et le moto-ventilateur d'autre part, lesdits points de fixation garantissant l'existence de jeux fonctionnels d'assemblage entre ces mêmes éléments, afin de proposer un ensemble aisé à assembler et d'une fiabilité accrue.

Dans ce but, l'invention propose un ensemble de refroidissement comme défini dans la revendication 1. Selon d'autres caractéristiques de l'invention :
- chaque doigt transversal comporte un bord transversal arrondi tourné vers le doigt transversal opposé, pour faciliter l'introduction des dents de la fourchette,
- l'écartement des dents d'une première fourchette correspond à la largeur transversale de la potence, pour immobiliser transversalement ladite première fourchette, et l'écartement des dents de la seconde fourchette opposée est supérieur à la largeur transversale de la potence pour permettre un rattrapage des dispersions de fabrication selon la direction transversale,
- les moyens de fixation supérieurs par encliquetage comportent :
   - à chaque extrémité transversale des premier et/ou troisième supports, une paroi supérieure verticale du premier et/ou troisième support, apte à être agencée parallèlement à une paroi supérieure verticale correspondante du deuxième support,
   - aux extrémités transversales des premier et/ou troisième supports, des premier et second moyens de guidage et de cliquet qui s'étendent chacun à partir de la paroi supérieure verticale des premier et/ou troisième supports, qui sont chacun reçus dans une lumière rectangulaire d'orientation transversale formée dans la paroi du deuxième support, ou dans un boîtier à l'extérieur du deuxième support, et qui comportent chacun :
      o au moins un doigt longitudinal, qui s'étend longitudinalement à partir de la paroi des premier et/ou troisième supports, et qui est apte à être reçu sans jeu entre les bords horizontaux de la lumière, pour immobiliser ledit doigt verticalement,
      o au moins une patte élastique, qui s'étend longitudinalement à partir de la paroi des premier et/ou troisième supports, qui traverse la lumière, et dont un ergot terminal est apte à s'étendre sans jeu au dos de la paroi du deuxième support pour verrouiller longitudinalement les supports l'un contre l'autre,
- l'encombrement transversal d'un premier moyen de guidage et de cliquet correspond à la largeur transversale de la lumière, pour immobiliser transversalement les parois l'une par rapport à l'autre, et l'encombrement transversal du second moyen de guidage et de cliquet est inférieur à la largeur transversale de la lumière, pour permettre un rattrapage des dispersions de fabrication transversales entre supports,
- une paroi verticale des premier et/ou troisième supports associée au premier moyen de guidage et de cliquet comporte un perçage coïncidant avec un fût tubulaire de vissage apte à recevoir une vis à matériaux tendres formé dans la paroi verticale du deuxième support à proximité de la lumière, pour permettre une fixation des parois par vis à matériaux tendres en cas de rupture de la patte élastique,
- au moins un moyen de guidage et de cliquet comporte à une première extrémité un doigt longitudinal et à une seconde extrémité deux pattes élastiques distantes d'un encombrement vertical correspondant à la hauteur de la lumière,
- au moins une nervure s'étend à partir du doigt au dos des pattes élastiques,
- au moins un moyen de guidage et de cliquet comporte à chacune de ses extrémités un doigt longitudinal et une patte élastique est agencée transversalement entre les deux doigts.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée d'un ensemble de refroidissement selon l'invention ;
- la figure 2 est une vue en perspective illustrant le montage d'un premier support sur un deuxième support ;
- la figure 3 est une vue de détail en perspective d'un des moyens de fixation inférieurs d'un premier ou troisième support sur le deuxième support ;
- la figure 4 est une vue de détail en perspective en cours de montage d'un des moyens de fixation inférieurs d'un premier ou troisième support sur le deuxième support ;
- la figure 5 est une vue de détail en perspective sensiblement selon la direction longitudinale d'un des moyens de fixation inférieurs de la figure 3 ;
- la figure 6 est une vue de détail en perspective du moyen de fixation inférieur opposé du premier ou troisième support sur le deuxième support ;
- la figure 7 est une vue de face de détail en perspective sensiblement selon la direction longitudinale des moyens de fixation inférieurs de la figure 6 ;
- la figure 8 est une vue de détail en perspective d'un premier mode de réalisation d'un des moyens de fixation supérieurs d'un premier ou troisième support sur le deuxième support ;
- la figure 9 est une autre vue de détail en perspective du premier mode de réalisation des moyens de fixation supérieur de la figure 8 ;
- la figure 10 est une vue de détail en perspective d'un premier mode de réalisation de l'autre moyen de fixation supérieur d'un premier ou troisième support sur le deuxième support ;
- la figure 11 est une autre vue de détail en perspective du premier mode de réalisation de l'autre moyen de fixation supérieur de la figure 10;
- la figure 12 est une vue de détail en perspective d'un second mode de réalisation d'un des moyens de fixation supérieur d'un premier ou troisième support sur le deuxième support ;
- la figure 13 est une vue de détail en perspective d'un second mode de réalisation de l'autre moyen de fixation supérieur du premier ou troisième support sur le deuxième support.

Dans la description qui va suivre, des chiffres de référence identiques désignent des pièces identiques ou ayant des fonctions similaires.

Dans la description et les revendications qui suivent, on utilisera à titre non limitatif les expressions telles que l'orientations « longitudinale », « transversale » et « verticale » en référence au trièdre (L, V, T) représenté aux figures et aux définitions données dans la description.

Dans la suite de la présente description on affectera l'indice "a" aux chiffres de référence agencés à une première extrémité transversale des éléments décrits et l'indice "b" aux chiffres de référence agencés à l'extrémité transversale opposée desdits éléments.

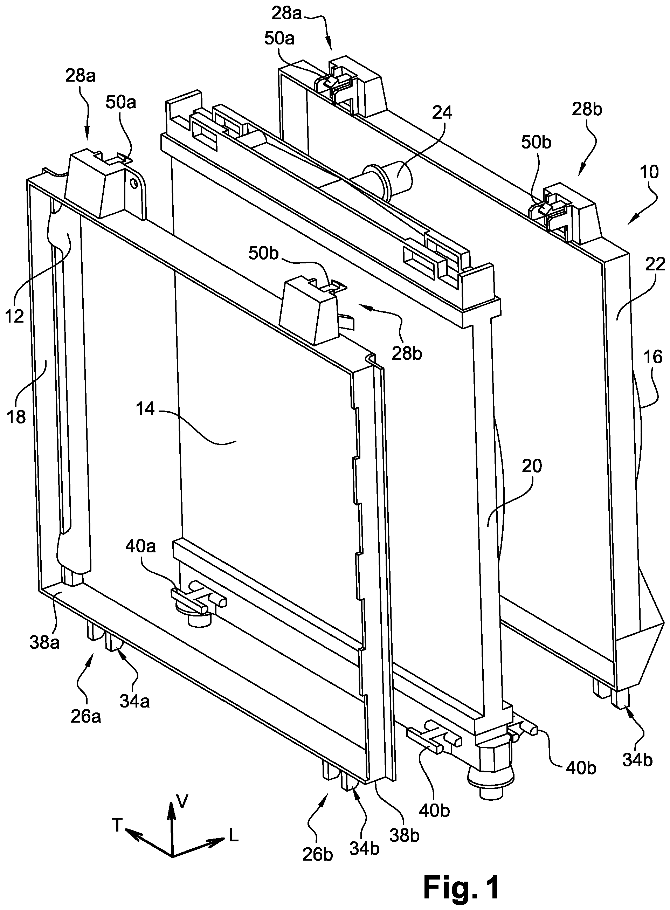

On a représenté à la figure 1 un ensemble 10 de refroidissement transversal dit "valise de refroidissement" réalisé selon l'invention. De manière connue, l'ensemble 10 est apte à être fixé à un élément transversal (non représenté) avant d'une structure de caisse de véhicule automobile dit "face avant technique". L'ensemble 10 comporte de manière connue un élément 12 apte à canaliser l'air de refroidissement également appelé convergent ou guide d'air, un radiateur 14 de refroidissement, et un moto-ventilateur 16 électrique de refroidissement, qui sont portés respectivement par des premier, deuxième et troisième supports 18, 20 et 22 associés en forme de cadres de dimensions similaires.

Le radiateur 14 de refroidissement est notamment un radiateur de type "down-flow" dans lequel le fluide caloporteur circule du haut vers le bas au cours du fonctionnement. A cet effet, le radiateur 14 comporte une connectique 24 d'entrée.

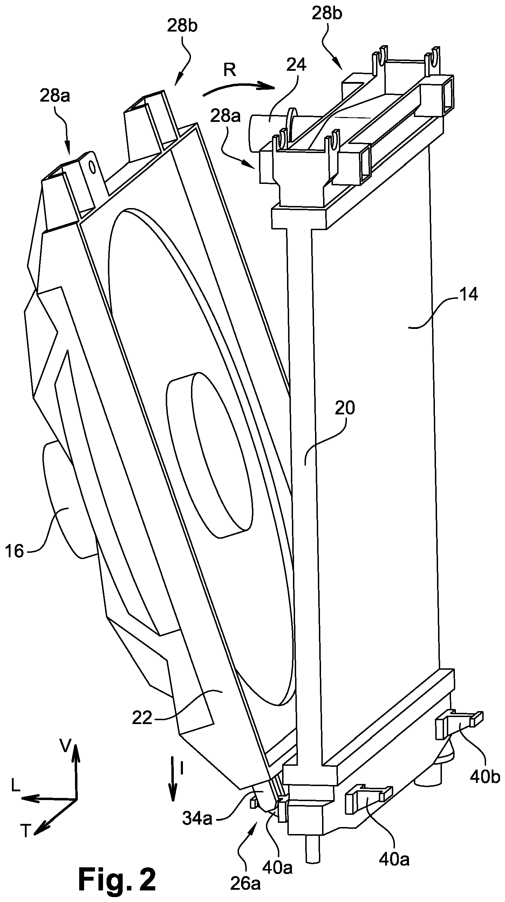

Comme l'illustrent les figures 1 et 2, le premier support 18 et le troisième support 22 sont fixés de part et d'autre du deuxième support 20 par l'intermédiaire de moyens 26a, 26b de fixation inférieur par basculement et de moyens 28a, 28b de fixation supérieurs par encliquetage.

Cette configuration permet, comme l'illustre la figure 2 qui illustre le montage du seul troisième support 22, d'introduire verticalement en position inclinée le troisième support 22 sur le deuxième support 20 suivant la direction de la flèche "I", puis le redressement à la verticale du troisième support22 parallèlement au deuxième support suivant la flèche "R", puis l'encliquetage suivant la direction longitudinale "L" du troisième support 22 sur le deuxième support 20.

Un montage similaire est prévu pour le premier support 18 (non représenté à la figure 2).

Conformément à l'invention, les moyens 26a, 26b, 28a, 28b de fixation comportent des moyens de rattrapage des dispersions de fabrication selon les directions longitudinale "L", transversale "T" et verticale "V".

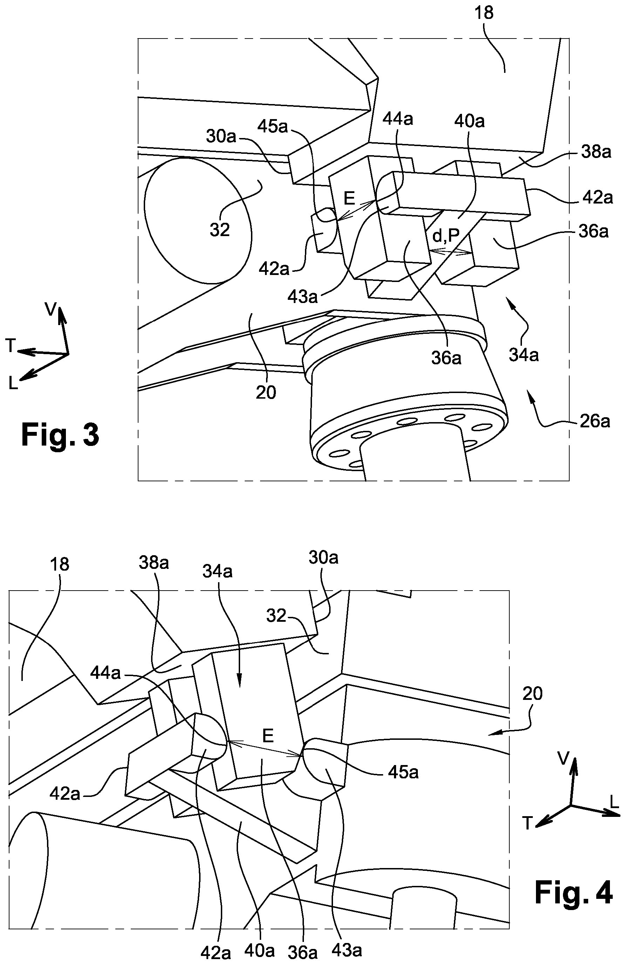

Les figures 3 et suivantes illustrent plus particulièrement les moyens de fixation (26a, 26b, 28a, 28b) inférieurs et supérieurs permettant la fixation du premier support 18 sur le deuxième support 20. Il sera compris que des moyens analogues sont interposés entre le troisième support 22 et le deuxième support 20 de manière symétrique au premier support 18.

Ainsi, comme l'illustrent en particulier, les moyens 26a, 26b de fixation inférieurs par basculement comportent :
- à chacune des extrémités transversales des premier et/ou troisième supports 18, 22, une face 30a, 30b inférieure verticale respective des premier et/ou troisième supports 18, 22, apte à être reçue contre une face 32 inférieure verticale du deuxième support 20, et
- à chacune des extrémités transversales des premier et/ou troisième supports 18, 22 deux fourchettes 34a, 34b respectives à deux dents 36a, 36b verticales, les fourchettes 34a, 34b étant portées par les extrémités transversalement opposées d'un bord 38a, 38b inférieur des premier et/ou troisième supports 18, 22, chaque fourchette 34a, 34b étant reçue verticalement à cheval sur une potence 40a, 40b associée qui s'étend longitudinalement à partir du deuxième support 20, ladite potence 40a, 40b portant deux paires de doigts 42a, 42b transversaux en saillie dont l'écartement "E" longitudinal correspond à l'épaisseur des dents 36a, 36b de la fourchette pour immobiliser la fourchette 34a, 34b longitudinalement après son introduction entre les paires de doigts 42a, 42b. Ceci permet un rattrapage du jeu selon la direction verticale "V", comme représenté notamment aux figures 3, 4, et 6.

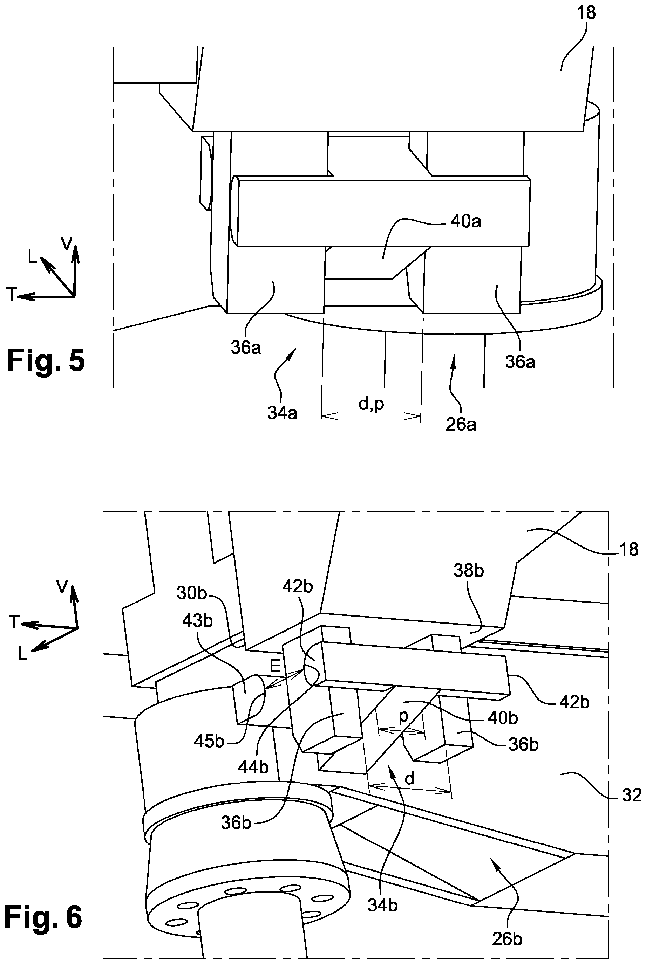

On remarquera que pour faciliter l'introduction des fourchettes 34a, 34b entre les doigts 42a, 42b, puis le basculement desdites fourchettes 34a, 34b comme représenté à la figure 6, chaque doigt 42a, 43a, 42b, 43b transversal comporte un bord 44a, 45a, 44b, 45b transversal arrondi qui est tourné vers le doigt transversal opposé.

Les moyens 26a, 26b de fixation inférieurs par basculement présentent deux configurations différentes, dépendant du côté considéré des premier et/ou troisième supports 18, 22 où ils sont agencés.

Selon un premier mode de réalisation qui a été représenté aux figures 3 à 5, l'écartement "d" des dents 36a d'une première fourchette 34a correspond à la largeur "p" transversale de la potence 40a. Ceci permet d'immobiliser transversalement ladite première fourchette 34a, qui n'est donc apte à effectuer un rattrapage de jeu que selon la direction "V".

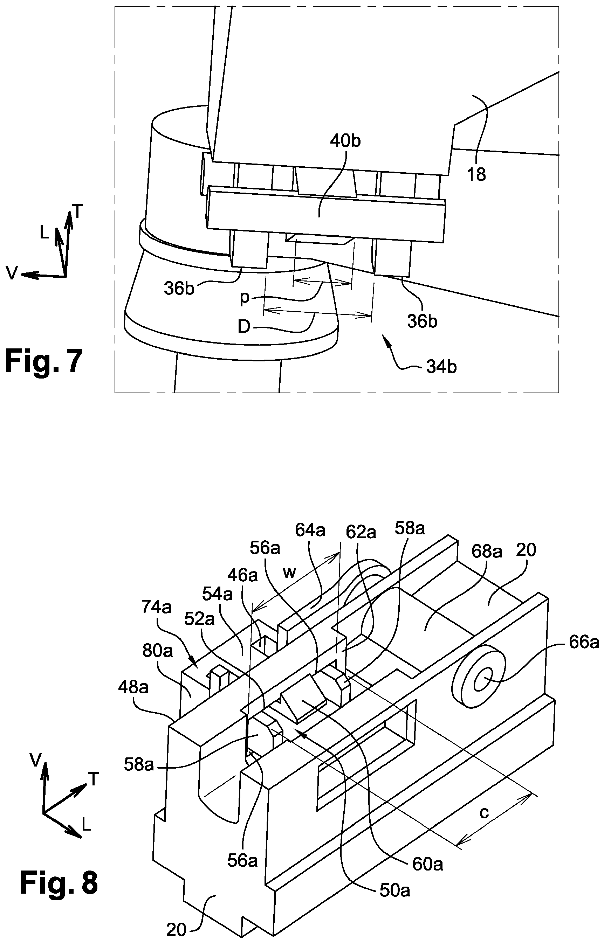

Selon un second mode de réalisation qui a été représenté aux figures 6 et 7, l'écartement "D des dents 36b de la seconde fourchette 34b opposée est supérieur à la largeur "p" transversale de la potence 40b pour permettre un rattrapage de jeu selon la direction transversale "T". Dans cette configuration la seconde fourchette 34b, est donc apte à effectuer un rattrapage de jeu selon la direction "V" et selon la direction "T".

Par ailleurs, comme l'illustrent les figures 8 à 11, les moyens 28a, 28b de fixation supérieurs par encliquetage comportent :
- à chaque extrémité transversale des premier et/ou troisième supports 18, 22, une paroi 46a, 46b supérieure verticale des premier et/ou troisième supports 18, 22, apte à être agencée parallèlement à une paroi 48a, 48b supérieure verticale correspondante du deuxième support 20,
- aux extrémités transversales des premier et/ou troisième supports 18, 22, des premier et second moyens 50a, 50b de guidage et de cliquet qui s'étendent chacun à partir de la paroi 46a, 46b supérieure verticale des premier et/ou troisième supports 18, 22, qui sont chacun reçus dans une lumière 52a, 52b rectangulaire d'orientation transversale formée dans la paroi du deuxième support 20.

Plus particulièrement les premier et second moyens 50a, 50b de guidage et de cliquet comportent au moins un doigt 58a, 58b longitudinal qui s'étend longitudinalement à partir de la paroi 46a, 46b des premier et/ou troisième supports 18, 22, et qui est apte à être reçu sans jeu vertical entre des bords 56a, 56b horizontaux de la lumière 52a, 52b pour immobiliser ledit doigt 58a, 58b verticalement.

Les premier et second moyens 50a, 50b de guidage et de cliquet comportent aussi au moins une patte 54a, 54b élastique qui s'étend longitudinalement à partir de la paroi 46a, 46b du premier et/ou troisième support 18, 22, qui traverse la lumière 52a, 52b, et dont un ergot 60a, 60b terminal est apte à s'étendre sans jeu au dos 62a, 62b de la paroi du deuxième support 20 pour verrouiller automatiquement dans le sens longitudinale les supports 18, 22 contre le deuxième support 20.

On remarquera que les premier et second moyens 50a, 50b de guidage et de cliquet ne permettent pas les mêmes degrés de liberté.

En effet, selon un premier mode de réalisation, l'encombrement transversal "C" du premier moyen 50a de guidage et de cliquet représenté aux figures 8 à 9 correspond à la largeur transversale "W" de la lumière 52a, pour immobiliser transversalement les parois 46a, 48a l'une par rapport à l'autre.

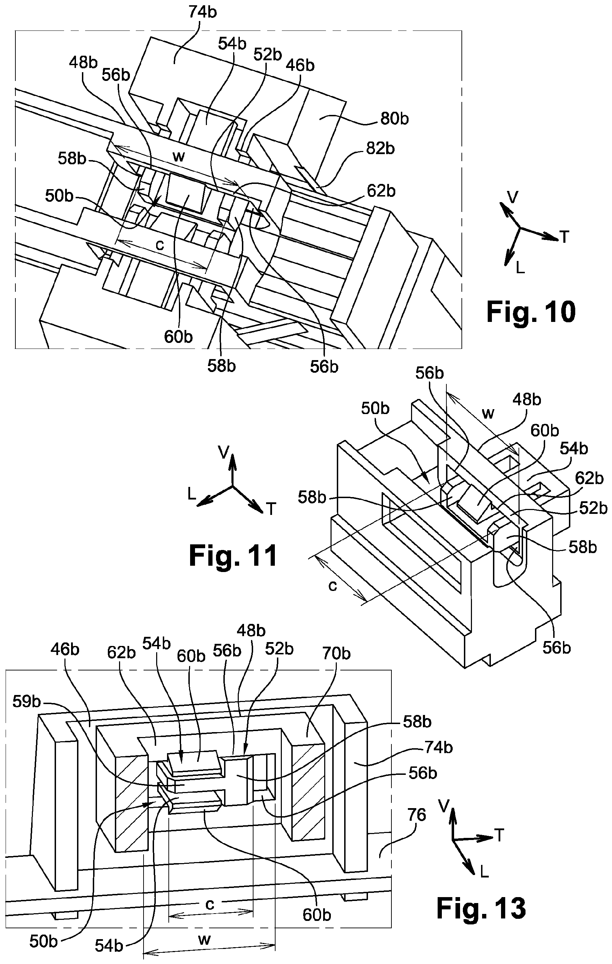

Du côté opposé, selon un second mode de réalisation représenté aux figures 10 à 11, l'encombrement transversal "C" du second moyen de guidage et de cliquet 50b est inférieur à la largeur transversale "W" de la lumière 52b, pour permettre un rattrapage des dispersions de fabrication transversales entre les supports 18, 22 suivant la direction "T".

Dans une variante préférée du premier moyen 50a de guidage et de cliquet qui a été représenté à la figure 8, une paroi verticale 64a des premier et/ou troisième supports 18, 22 associée au premier moyen 50a de guidage et de cliquet comporte un perçage coïncidant avec un fût 68a tubulaire qui est apte à recevoir une vis à matériaux tendres, et qui est formé dans la paroi verticale du deuxième support 20 à proximité de la lumière 56a, pour permettre une fixation des parois 18, 22 par vissage en cas de rupture de la patte 54a élastique.

Le fût 68a de vissage comporte par exemple un alésage traversant66a, comme représenté à la figure 8, de sorte qu'il soit possible de visser deux vis à matériaux tendres des deux côtés de l'alésage 66a. Ainsi ce fût 68a de vissage est, commun aux premier et troisième supports et permet le vissage des deux côtés du support 20. Le fut de vissage 68a peut, également, comporter deux demis alésages 66a non communiquant.

Il existe plusieurs configurations des moyens 50a, 50b de guidage et de cliquet.

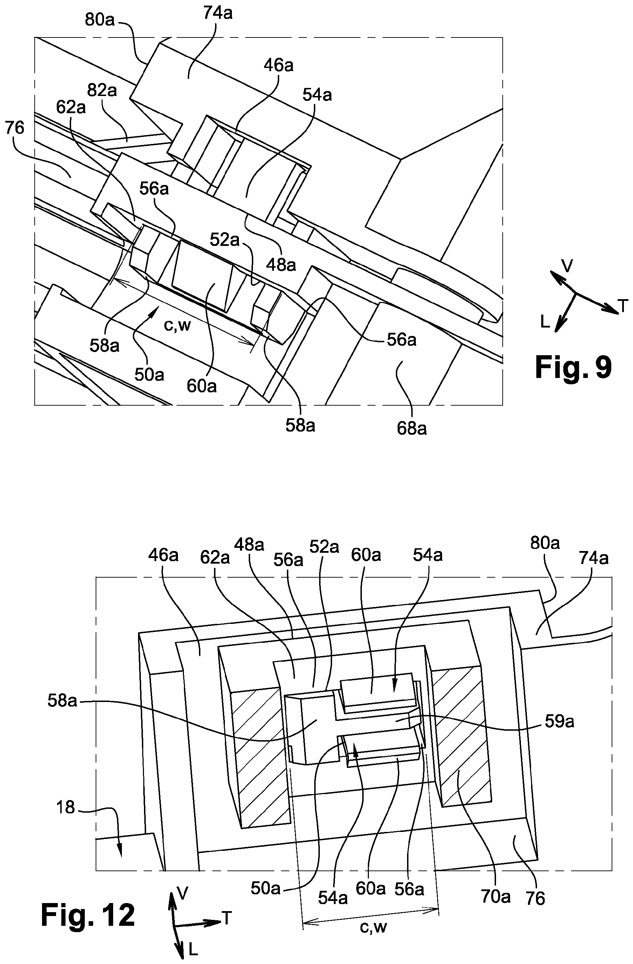

Selon une première configuration qui a été représentée aux figures 12 et 13, au moins un moyen 50a, 50b de guidage et de cliquet comporte à une première extrémité le doigt 58a, 58b longitudinal et à une seconde extrémité les deux pattes 54a, 54b élastiques d'un encombrement vertical correspondant à la hauteur de la lumière 52a, 52b.

Les doigts 58a, 58b et pattes 54a, 54b sont venues de matière avec la paroi 46a des premier ou troisième supports 18, 22. De préférence, au moins une nervure 59a, 59b, elle aussi venue de matière, s'étend à partir du doigt 58a, 58b entre et au dos des pattes 54a, 54b élastiques pour assurer la rigidité du moyen 50a, 50b de guidage et de cliquet, comme représenté à la figure 12.

En variante, selon une seconde configuration qui a été représentée aux figures 9 à 11, au moins un moyen 50a, 50b de guidage et de cliquet comporte à chacune de ses extrémités un doigt 58a, 58b longitudinal et une patte 54a, 54b élastique est agencée transversalement entre les deux doigts 58a, 58b.

Contrairement à la première configuration précédemment décrite, dans cette seconde configuration, les doigts 58a, 58b ne comportent pas de nervure.

Les figures 12 et 13 illustrent un mode de réalisation particulier dans lequel, dans le but d'assurer un positionnement des supports 18, 22 sur le support 20, chaque paroi 48a, 48b supérieure verticale du deuxième support 20 est portée par un boîtier 70a, 70b mâle faisant saillie à partir d'une face verticale du deuxième support 20, et chaque paroi 46a supérieure verticale des premier ou troisième supports 18, 22 est portée par un boîtier 74a, 74b femelle correspondant, recevant le boîtier 70a, 70b mâle, qui fait saillie à partir d'un bord 76 supérieur du premier ou troisième support 18, 22.

D'une manière plus générale, chaque moyen 50a, 50b de guidage et de cliquet est porté par un boîtier 74a, 74b qui comporte un bord 80a, 80b vertical longitudinal à partir duquel s'étend une patte 82a, 82b élastique qui prend appui sur la face en regard du deuxième support 20. Cette configuration permet avantageusement un rattrapage du jeu longitudinal entre supports.

On remarquera, à la lumière de la figure 1, que les premiers moyens 50a de guidage et de cliquet des premier et troisième supports 18, 22 peuvent être agencés en regard l'un de l'autre, et que les second moyens 50b de guidage et de cliquet des premier et troisième supports 18, 22 sont alors aussi agencés en regard l'un de l'autre. De même, les premières fourchettes 34a des premier et troisième supports 18, 22 peuvent être agencées en regard l'une de l'autre et alors les secondes fourchettes 34b des premier et troisième supports 18, 22 sont agencées en regard l'une de l'autre. Cette symétrie des fixations des premier et troisième supports 18, 22 par rapport au deuxième support 20 garantit une homogénéité du rattrapage des jeux.

L'invention propose donc un ensemble 10 de refroidissement transversal dont les jeux d'assemblage fonctionnels et le rattrapage des dispersions de fabrication internes permet d'éviter le travail de ses composants et donc minimise les risques de rupture de ceux-ci.

## Revendications

1. Ensemble (10) de refroidissement transversal apte à être fixé à un élément transversal avant d'une structure de caisse de véhicule automobile, comportant un élément (12) apte à canaliser l'air de refroidissement ou convergent, un radiateur (14) de refroidissement, et un moto-ventilateur (16) électrique de refroidissement, portés respectivement par des premier (18), deuxième (20) et troisième supports (22) associés en forme de cadres, les premier (18) et troisième supports (22) étant fixés de part et d'autre du deuxième support (20) par l'intermédiaires de moyens (26a, 26b) de fixation inférieurs par basculement et de moyens (28a, 28b) de fixation supérieurs par encliquetage, pour permettre successivement l'introduction verticale en position inclinée de chaque premier (18) et/ou troisième supports (22) sur le deuxième support (20), puis le redressement à la verticale dudit premier (18) et/ou troisième support (20) parallèlement au deuxième support (20) puis l'encliquetage suivant la direction longitudinale (L) dudit premier (18) et/ou troisième support (22) sur le deuxième support (20),
**caractérisé en ce que** les moyens (26a, 26b, 28a, 28b, 28) de fixation comportent des moyens de rattrapage des dispersions de fabrication selon les directions longitudinale (L), transversale (T) et verticale (V), et **en ce que** les moyens (26a, 26b) de fixation inférieurs par basculement comportent :
- une face (30a, 30b) inférieure verticale du premier (18) support et/ou troisième support (22), apte à être reçue contre une face (32) inférieure verticale du deuxième support (20), et
- deux fourchettes (34a, 34b) à deux dents (36a, 36b) verticales, portées par les extrémités transversalement opposées d'un bord (38a, 38b) inférieur du premier (18) et/ou troisième support (22), chaque fourchette (34a, 34b) étant reçue verticalement à cheval sur une potence (40a, 40b) associée qui s'étend longitudinalement à partir du deuxième support (20), ladite potence (40a, 40b) portant deux paires de doigts (42a, 42b) transversaux en saillie dont l'écartement (E) longitudinal correspond à l'épaisseur des dents (36a, 36b) de la fourchette (34a, 34b) pour immobiliser la fourchette (34a, 34b) longitudinalement après son introduction et pour permettre un rattrapage des dispersions de fabrication selon la direction verticale (V).

2. Ensemble (10) de refroidissement selon la revendication 1, **caractérisé en ce que** chaque doigt (42a, 42b) transversal comporte un bord (44a, 44b) transversal arrondi tourné vers le doigt (42a, 42b) transversal opposé, pour faciliter l'introduction des dents (36a, 36b) de la fourchette (34a, 34b).

3. Ensemble (10) de refroidissement selon la revendication 2, **caractérisé en ce que** l'écartement (D) des dents (36a) d'une première fourchette (34a) correspond à la largeur (p) transversale de la potence (40b), pour immobiliser transversalement ladite première fourchette (34a), et **en ce que** l'écartement (D) des dents (36b) de la seconde fourchette (34b) opposée est supérieur à la largeur (p) transversale de la potence (40b) pour permettre un rattrapage des dispersions de fabrication selon la direction transversale (T).

4. Ensemble (10) de refroidissement selon l'une des revendications 1 à 3, **caractérisé en ce que** les moyens (28) de fixation supérieurs par encliquetage comportent :
- à chaque extrémité transversale des premier (18) et/ou troisième supports (22), une paroi (46a, 46b) supérieure verticale du premier (18) et/ou troisième support (22), apte à être agencée parallèlement à une paroi (48a, 48b) supérieure verticale correspondante du deuxième support (20),
- aux extrémités transversales des premier (18) et/ou troisième supports (22), des premier et second moyens (50a, 50b) de guidage et de cliquet qui s'étendent chacun à partir de la paroi (46a, 46b) supérieure verticale des premier (18) et/ou troisième supports (22), qui sont chacun reçus dans une lumière (52a, 52b) rectangulaire d'orientation transversale formée dans la paroi du deuxième support (20), ou dans un boîtier à l'extérieur du deuxième support, et qui comportent chacun :
• au moins un doigt (58a, 58b) longitudinal, qui s'étend longitudinalement à partir de la paroi (46a, 46b) des premier et/ou troisième supports (18, 22), et qui est apte à être reçu sans jeu entre les bords (56a, 56b) horizontaux de la lumière (52a, 52b), pour immobiliser ledit doigt (58a, 58b) verticalement,
• au moins une patte (54a, 54b) élastique, qui s'étend longitudinalement à partir de la paroi (46a, 46b) des premier et/ou troisième supports (18, 22), qui traverse la lumière (52a, 52b), et dont un ergot (60a, 60b) terminal est apte à s'étendre sans jeu au dos (62a, 62b) de la paroi du deuxième support (20) pour verrouiller longitudinalement les supports (18, 22) l'un contre l'autre.

5. Ensemble (10) de refroidissement selon la revendication 4, **caractérisé en ce que** l'encombrement (C) transversal d'un premier moyen (50a)de guidage et de cliquet correspond à la largeur (W) transversale de la lumière (52a), pour immobiliser transversalement les parois (46a, 48a) l'une par rapport à l'autre, et **en ce que** l'encombrement (C) transversal du second moyen (50b) de guidage et de cliquet est inférieur à la largeur (W) transversale de la lumière (50b), pour permettre un rattrapage des dispersions de fabrication transversales entre supports.

6. Ensemble de refroidissement selon la revendication 5, **caractérisé en ce qu'**une paroi (64a) verticale des premier (18) et/ou troisième supports (22) associée au premier moyen (50a) de guidage et de cliquet comporte un perçage coïncidant avec un fût (66a) tubulaire de vissage apte à recevoir une vis à matériaux tendres formé dans la paroi verticale du deuxième support (20) à proximité de la lumière (56a), pour permettre une fixation des parois par vis à matériaux tendres en cas de rupture de la patte (54a) élastique.

7. Ensemble (10) de refroidissement selon l'une des revendications 4 à 6, **caractérisé en ce qu'**au moins un moyen (50a, 50b) de guidage et de cliquet comporte à une première extrémité un doigt (58a, 58b) longitudinal et à une seconde extrémité deux pattes (54a, 54b) élastiques distantes d'un encombrement vertical correspondant à la hauteur de la lumière (52a, 52b).

8. Ensemble (10) de refroidissement selon la revendication 7, **caractérisé en ce qu'**au moins une nervure (59a, 59b) s'étend à partir du doigt (58a, 58b) au dos des pattes (54a, 54b) élastiques.

9. Ensemble (10) de refroidissement selon l'une des revendications 4 à 6, **caractérisé en ce qu'**au moins un moyen (50a, 50b) de guidage et de cliquet comporte à chacune de ses extrémités un doigt (58a, 58b) longitudinal et **en ce qu'**une patte (54a, 54b) élastique est agencée transversalement entre les deux doigts (58a, 58b).

## Patentansprüche

1. Querliegende Kühlanordnung (10), die geeignet ist, an einem querliegenden Element vor einer Karosseriestruktur eines Kraftfahrzeugs befestigt zu werden, umfassend ein Element (12), das geeignet ist, die Kühlluft zu kanalisieren, oder einen Diffusor, einen Kühler (14) und ein elektrisches Kühlgebläse (16), die jeweils von zugehörigen ersten (18), zweiten (20) und dritten Halterungen (22) in Form von Rahmen getragen werden, wobei die erste Halterung (18) und die dritte Halterung (22) beidseits der zweiten Halterung (20) über untere Schwenkbefestigungsmittel (26a, 26b) und obere Einrastbefestigungsmittel (28a, 28b) befestigt sind, um nacheinander das vertikale Einsetzen in schräger Position jeder ersten Halterung (18) und/oder dritten Halterung (22) an der zweiten Halterung (20) und dann das Aufrichten der ersten Halterung (18) und/oder dritten Halterung (20) in die Vertikale parallel zur zweiten Halterung (20) und dann das Einrasten der ersten Halterung (18) und/oder dritten Halterung (22) an der zweiten Halterung (20) entlang der Längsrichtung (L) zu ermöglichen,
**dadurch gekennzeichnet, dass** die Befestigungsmittel (26a, 26b, 28a, 28b, 28) Mittel zum Ausgleichen der Fertigungstoleranzen entlang der Längsrichtung (L), Querrichtung (T) und vertikalen Richtung (V) umfassen und dass die unteren Schwenkbefestigungsmittel (26a, 26b) umfassen:
- eine vertikale untere Seite (30a, 30b) der ersten Halterung (18) und/oder dritten Halterung (22), die geeignet ist, gegen eine vertikale untere Seite (32) der zweiten Halterung (20) aufgenommen zu werden, und
- zwei Gabeln (34a, 34b) mit zwei vertikalen Zähnen (36a, 36b), die von den quer entgegengesetzten Enden einer unteren Kante (38a, 38b) der ersten Halterung (18) und/oder dritten Halterung (22) getragen werden, wobei jede Gabel (34a, 34b) vertikal rittlings auf einem zugehörigen Träger (40a, 40b) aufgenommen wird, der sich längs ausgehend von der zweiten Halterung (20) erstreckt,
wobei der Träger (40a, 40b) zwei überstehende Paare Querfinger (42a, 42b) trägt, deren Längsabstand (E) der Dicke der Zähne (36a, 36b) der Gabel (34a, 34b) entspricht, um die Gabel (34a, 34b) nach ihrem Einsetzen längs zu blockieren und um ein Ausgleichen der Fertigungstoleranzen entlang der vertikalen Richtung (V) zu ermöglichen.

2. Kühlanordnung (10) nach Anspruch 1, **dadurch gekennzeichnet, dass** jeder Querfinger (42a, 42b) eine gerundete Querkante (44a, 44b) umfasst, die dem entgegengesetzten Querfinger (42a, 42b) zugewandt ist, um das Einsetzen der Zähne (36a, 36b) der Gabel (34a, 34b) zu erleichtern.

3. Kühlanordnung (10) nach Anspruch 2, **dadurch gekennzeichnet, dass** der Abstand (D) der Zähne (36a) einer ersten Gabel (34a) der Querbreite (p) des Trägers (40b) entspricht, um die erste Gabel (34a) quer zu blockieren, und dass der Abstand (D) der Zähne (36b) der zweiten entgegengesetzten Gabel (34b) größer als die Querbreite (p) des Trägers (40b) ist, um ein Ausgleichen der Fertigungstoleranzen entlang der Querrichtung (T) zu ermöglichen.

4. Kühlanordnung (10) nach einem der Ansprüche 1 bis 3, **dadurch gekennzeichnet, dass** die oberen Einrastbefestigungsmittel (28) umfassen:
- an jedem Querende der ersten Halterung (18) und/oder dritten Halterung (22) eine vertikale obere Wand (46a, 46b) der ersten Halterung (18) und/oder dritten Halterung (22), die geeignet ist, parallel zu einer entsprechenden vertikalen oberen Wand (48a, 48b) der zweiten Halterung (20) angeordnet zu werden,
- an den Querenden der ersten Halterung (18) und/oder dritten Halterung (22) erste und zweite Führungs- und Rastmittel (50a, 50b), die sich jeweils ausgehend von der vertikalen oberen Wand (46a, 46b) der ersten Halterung (18) und/oder dritten Halterung (22) erstrecken, die jeweils in einem rechteckigen, quer ausgerichteten Schlitz (52a, 52b), der in der Wand der zweiten Halterung (20) ausgebildet ist, oder in einem Gehäuse außerhalb der zweiten Halterung aufgenommen werden und die jeweils umfassen:
• mindestens einen Längsfinger (58a, 58b), der sich längs ausgehend von der Wand (46a, 46b) der ersten und/oder dritten Halterung (18, 22) erstreckt und der geeignet ist, spielfrei zwischen den horizontalen Kanten (56a, 56b) des Schlitzes (52a, 52b) aufgenommen zu werden, um den Finger (58a, 58b) vertikal zu blockieren,
• mindestens einen elastischen Lappen (54a, 54b), der sich längs ausgehend von der Wand (46a, 46b) der ersten und/oder dritten Halterung (18, 22) erstreckt, der den Schlitz (52a, 52b) durchquert und dessen eine Endnase (60a, 60b) geeignet ist, sich spielfrei auf der Rückseite (62a, 62b) der Wand der zweiten Halterung (20) zu erstrecken, um die Halterungen (18, 22) längs gegeneinander zu verriegeln.

5. Kühlanordnung (10) nach Anspruch 4, **dadurch gekennzeichnet, dass** das Quermaß (C) eines ersten Führungs- und Rastmittels (50a) der Querbreite (W) des Schlitzes (52a) entspricht, um die Wände (46a, 48a) quer zueinander zu blockieren, und dass das Quermaß (C) des zweiten Führungs- und Rastmittels (50b) kleiner als die Querbreite (W) des Schlitzes (50b) ist, um ein Ausgleichen der Fertigungstoleranzen in Querrichtung zwischen Halterungen zu ermöglichen.

6. Kühlanordnung nach Anspruch 5, **dadurch gekennzeichnet, dass** eine vertikale Wand (64a) der ersten Halterung (18) und/oder der dritten Halterung (22), die zum ersten Führungs- und Rastmittel (50a) gehört, eine Bohrung umfasst, die mit einer rohrförmigen Schraubhülse (66a) koinzidiert, die geeignet ist, eine Schraube aus weichen Werkstoffen aufzunehmen, und die in der vertikalen Wand der zweiten Halterung (20) in der Nähe des Schlitzes (56a) gebildet ist, um eine Befestigung der Wände mit Schrauben aus weichen Werkstoffen im Fall des Bruchs des elastischen Lappens (54a) zu ermöglichen.

7. Kühlanordnung (10) nach einem der Ansprüche 4 bis 6, **dadurch gekennzeichnet, dass** mindestens ein Führungs- und Rastmittel (50a, 50b) an einem ersten Ende einen Längsfinger (58a, 58b) und an einem zweiten Ende zwei elastische Lappen (54a, 54b) umfasst, die um ein vertikales Maß voneinander entfernt sind, das der Höhe des Schlitzes (52a, 52b) entspricht.

8. Kühlanordnung (10) nach Anspruch 7, **dadurch gekennzeichnet, dass** sich mindestens eine Rippe (59a, 59b) ausgehend von dem Finger (58a, 58b) auf der Rückseite der elastischen Lappen (54a, 54b) erstreckt.

9. Kühlanordnung (10) nach einem der Ansprüche 4 bis 6, **dadurch gekennzeichnet, dass** mindestens ein Führungs-und Rastmittel (50a, 50b) an jedem seiner Enden einen Längsfinger (58a, 58b) umfasst und dass ein elastischer Lappen (54a, 54b) quer zwischen den beiden Fingern (58a, 58b) angeordnet ist.

## Claims

1. Transverse cooling assembly (10) able to be fixed to a front transverse element of a motor vehicle body structure, comprising an element (12) able to duct the cooling air or convergent, a cooling radiator (14), and an electric cooling fan unit (16), which are borne respectively by first (18), second (20) and third (22) associated supports in the form of frames, the first (18) and third (22) supports being fixed one on either side of the second support (20) by lower means (26a, 26b) of attachment by tilting and upper means (28a, 28b) of attachment by clip-fastening, so as to allow each first (18) and/or third (22) support successively to be introduced vertically in an inclined position onto the second support (20) then allow the first (18) and/or third (20) support to be stood up vertically parallel to the second support (20) then allow said first (18) and/or third (22) support to be clipped in the longitudinal direction (L) to the second support (20),
**characterized in that** the fixing means (26a, 26b, 28a, 28b, 28) comprise means of absorbing manufacturing spread in the longitudinal (L), transverse (T) and vertical (V) directions, and **in that** the lower means (26a, 26b) of fixing by tilting comprise:
- a vertical lower face (30a, 30b) of the first support (18) and/or of the third support (22), which can be received against a vertical lower face (32) of the second support (20), and
- two forks (34a, 34b) having two vertical prongs (36a, 36b), borne by the transversely opposite ends of a lower edge (38a, 38b) of the first (18) and/or third (22) support, each fork (34a, 34b) being received vertically astride an associated bracket (40a, 40b) which extends longitudinally from the second support (20), said bracket (40a, 40b) bearing two pairs of projecting transverse fingers (42a, 42b) of which the longitudinal space (E) corresponds to the thickness of the prongs (36a, 36b) of the fork (34a, 34b) so as to immobilize the fork (34a, 34b) longitudinally after it has been introduced and so as to absorb manufacturing spread in the vertical direction (V).

2. Cooling assembly (10) according to Claim 1, **characterized in that** each transverse finger (42a, 42b) has a rounded transverse edge (44a, 44b) facing toward the opposite transverse finger (42a, 42b) to make it easier to introduce the prongs (36a, 36b) of the fork (34a, 34b).

3. Cooling assembly (10) according to Claim 2, **characterized in that** the spacing (D) of the prongs (36a) of a first fork (34a) corresponds to the transverse width (p) of the bracket (40b), to immobilize said first fork (34a) transversely, and **in that** the spacing (D) of the prongs (36b) of the opposite second fork (34b) is greater than the transverse width (p) of the bracket (40b) to make it possible to absorb manufacturing spread in the transverse direction (T).

4. Cooling assembly (10) according to one of Claims 1 to 3, **characterized in that** the upper means (28) of fixing by clip fastening comprise:
- at each transverse end of the first (18) and/or third (22) supports, a vertical upper wall (46a, 46b) of the first (18) and/or third (22) support, which can be positioned parallel to a corresponding vertical upper wall (48a, 48b) of the second support (20),
- at the transverse ends of the first (18) and/or third (22) supports, first and second guiding and catching means (50a, 50b) each extending from the vertical upper wall (46a, 46b) of the first (18) and/or third (22) supports, each received in a transversely oriented rectangular opening (52a, 52b) formed in the wall of the second support (20), or in a casing on the outside of the second support, and each comprising:
• at least one longitudinal finger (58a, 58b) which extends longitudinally from the wall (46a, 46b) of the first and/or third support (18, 22) and which can be received without play between the horizontal edges (56a, 56b) of the opening (52a, 52b), in order to immobilize said finger (58a, 58b) vertically,
• at least one elastic tab (54a, 54b) which extends longitudinally through the wall (46a, 46b) of the first and/or third support (18, 22), which passes through the opening (52a, 52b) and of which an end spur (60a, 60b) is able to extend without play on the back (62a, 62b) of the wall of the second support (20) so as to lock the supports (18, 22) together longitudinally.

5. Cooling assembly (10) according to Claim 4, **characterized in that** the transverse size (C) of a first guiding and catching means (50a) corresponds to the transverse width (W) of the opening (52a), so as to immobilize the walls (46a, 48a) transversely relative to one another, and **in that** the transverse size (C) of the second guiding and catching means (50b) is less than the transverse width (W) of the opening (50b) so as to absorb transverse manufacturing spread between supports.

6. Cooling assembly according to Claim 5, **characterized in that** a vertical wall (64a) of the first (18) and/or third (22) supports which is associated with the first guiding and catching means (50a) comprises a drilling that coincides with a tubular screw barrel (66a) able to receive a soft-materials screw and formed in the vertical wall of the second support (20) near the opening (56a), so as to allow the walls to be fixed together using soft-materials screws in the event of the elastic tab (54a) breaking.

7. Cooling assembly (10) according to one of Claims 4 to 6, **characterized in that** at least one guiding and catching means (50a, 50b) at a first end comprises a longitudinal finger (58a, 58b) and at a second end comprises two elastic tabs (54a, 54b) distant from one another by a vertical size corresponding to the height of the opening (52a, 52b).

8. Cooling assembly (10) according to Claim 7, **characterized in that** at least one rib (59a, 59b) extends from the finger (58a, 58b) on the back of the elastic tabs (54a, 54b).

9. Cooling assembly (10) according to one of Claims 4 to 6, **characterized in that** at least one guiding and catching means (50a, 50b) comprises a longitudinal finger (58a, 58b) at each of its ends, and **in that** an elastic tab (54a, 54b) is positioned transversely between the two fingers (58a, 58b).
